Europäisches Patentamt

European Patent Office

Office européen des brevets

(19)

(11) Veröffentlichungsnummer: **0 115 557**
**B1**

(12) **EUROPÄISCHE PATENTSCHRIFT**

(45) Veröffentlichungstag der Patentschrift:
03.09.86

(51) Int. Cl.⁴: **A 47 J 31/06**

(21) Anmeldenummer: **83101192.9**

(22) Anmeldetag: **08.02.83**

(54) **Filtergefäss.**

(43) Veröffentlichungstag der Anmeldung:
**15.08.84 Patentblatt 84/33**

(45) Bekanntmachung des Hinweises auf die Patenterteilung:
**03.09.86 Patentblatt 86/36**

(84) Benannte Vertragsstaaten:
**AT BE CH DE LI NL**

(56) Entgegenhaltungen:
**DE-A-1 454 097**
**DE-A-2 010 675**
**DE-A-2 944 264**
**DE-B-1 454 148**

(73) Patentinhaber: **petra- electric Peter Hohlfeldt GmbH & Co., D-8872 Burgau (DE)**

(72) Erfinder: **Der Erfinder hat auf seine Nennung verzichtet**

(74) Vertreter: **Patentanwälte Grünecker, Dr. Kinkeldey, Dr. Stockmair, Dr. Schumann, Jakob, Dr. Bezold, Meister, Hilgers, Dr. Meyer-Plath, Maximilianstrasse 58, D-8000 München 22 (DE)**

## Beschreibung

Die Erfindung bezieht sich auf ein konisches Filtergefäß zur Aufnahme einer Filtertüte zur Herstellung von Aromaauszügen aus Kaffee oder Tee, mit einem an das Filtergefäß angeformten Überlaufkanal.

Es ist ein konisches Filtergefäß gemäß dem Oberbegriff des Patentanspruchs 1 bekannt (DE-A-29 44 264), an dessen Außenflache ein lediglich eine Einlaßöffnung und eine Auslaßöffnung aufweisender, ansonsten geschlossener Überlaufkanal ausgebildet ist. Dieser Überlaufkanal hat die Aufgabe, über das Filtergefäß überlaufende Flüssigkeit sicher in einen unter dem Filtergefäß stehenden Behalter zu leiten. Aus dem Stand der Technik (DE-A-20 10 675, DE-A-14 54 097 und DE-B-14 54 148) sind weitere Filtergefäße bekannt, bei denen in allen Fallen der Überlaufkanal als lediglich eine Einlaßöffnung und eine Auslaßöffnung, aber ansonsten geschlossenes rohrförmiges Gebilde ausgebildet ist. Diese bekannten Filtergefäße haben den Nachteil, daß sie relativ schwierig herzustellen und durch den rohrformigen Überlaufkanal nur schwer sauber zu halten sind.

Der vorliegenden Erfindung liegt die Aufgabe zugrunde, ein Filtergefäß der eingangs genannten Art anzugeben, bei dem der Überlaufkanal einfacher herstellbar und leichter sauberzuhalten ist. Diese Aufgabe wird mit den kennzeichnenden Merkmalen des Anspruchs 1 gelöst.

Bei dem angegebenen Filtergefäß besteht der Überlaufkanal lediglich aus zwei außen an das Filtergefaß angeformten Rippen. Solche Rippen lassen sich unkompliziert herstellen. Da dieser uöerlaufkanal nach außen offen ist, läßt er sich auch ohne besondere Vorkehrungen sauberhalten.

Die Erfindung ist nachstehend an einem Ausführungsbeispiel erläutert, das in der Zeichnung dargestellt ist.

Es zeigen:

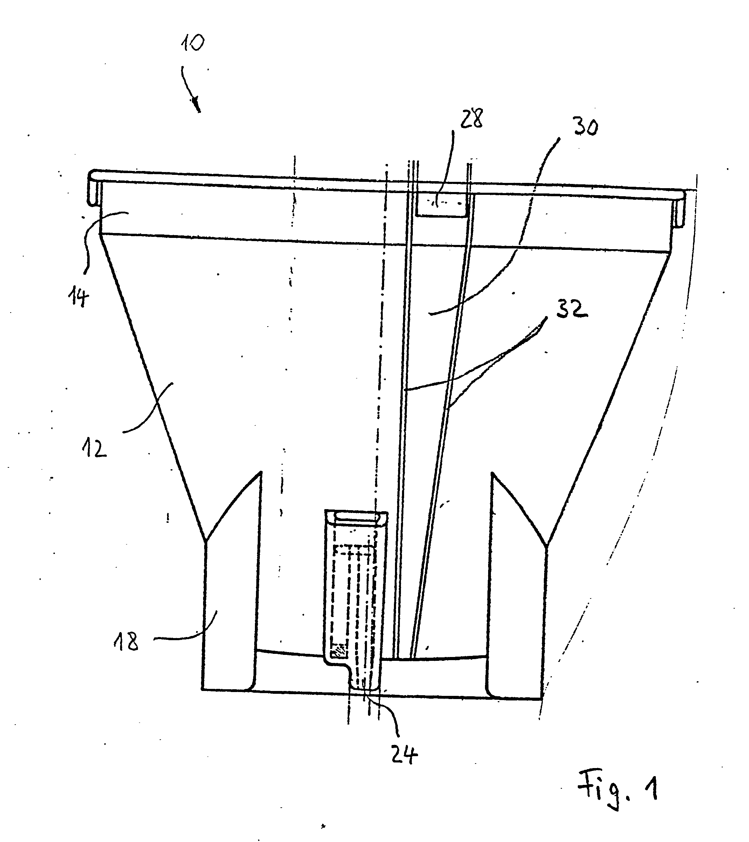

Figur 1 eine Ansicht eines Filtergefäßes gemäß der Erfindung,

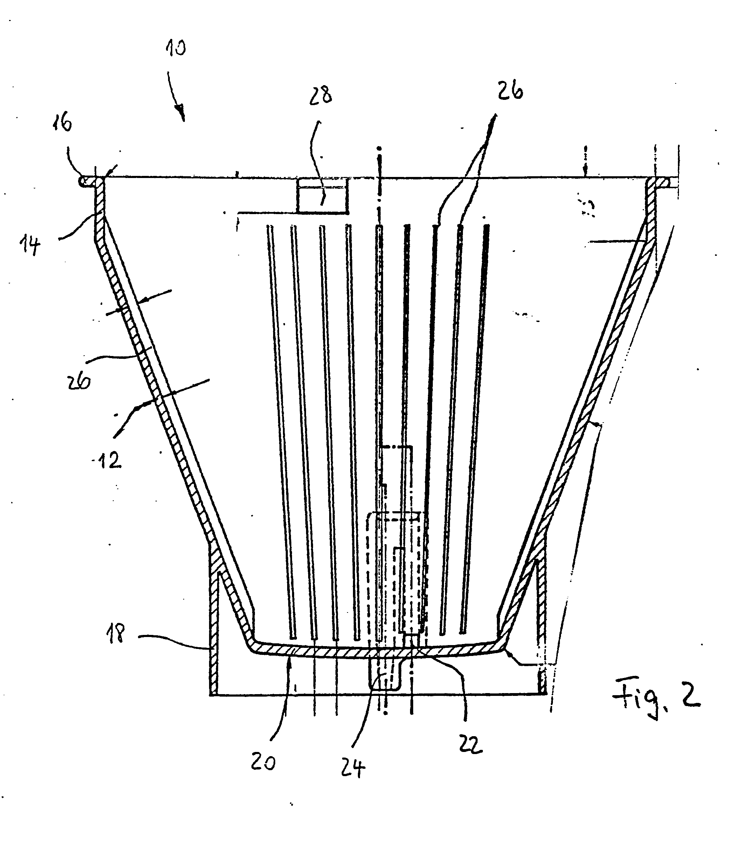

Figur 2 einen Vertikalschnitt durch das Filtergefäß und

Figur 3 eine Unteransicht des Filtergefäßes.

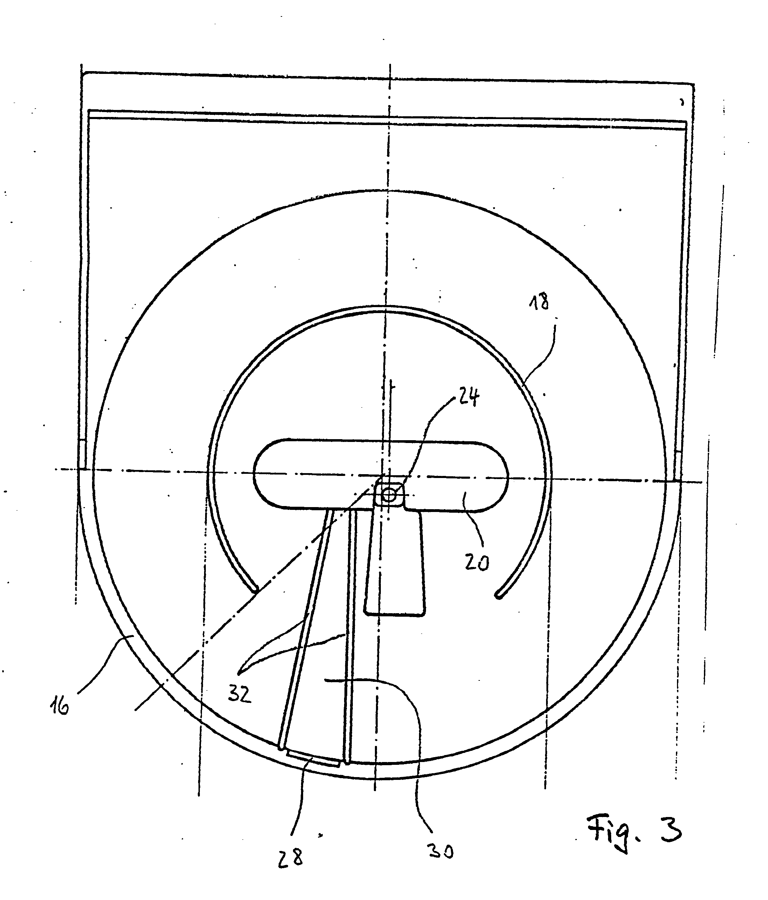

Das in den Figuren gezeigte Filtergefäß 10 ist in einem Stück aus Kunststoff hergestellt und hat einen konisch nach unten zulaufenden Hauptteil 12 mit einem zylindrischen Rand 14. Von dem zylindrischen Rand 14 steht ein horizontal verlaufender Kragen 16 ab, der auf einer Seite des zylindrischen Randes 14 rund und auf der anderen Seite (obere Hälfte der Figur 3) rechteckig begrenzt ist. Mit Hilfe des Kragens 16 kann das Filtergefäß 10 in eine entsprechende Führung einer Kaffee- oder Teemaschine eingeschoben werden.

Es ist aber auch möglich, das Filtergefäß 10 so auszubilden, daß es auf den oberen Rand einer Kaffee- oder Teekanne aufgesetzt werden kann.

Im unteren Bereich des Filtergefäßes 10 ist eine teilzylindrische Schürze 18 angeformt, die den geschlossenen Boden 20 des Filtergefäßes 10 nach unten überragt. Aus dem Boden 20 führt über eine Durchtrittsöffnung 22 ein Auslauf 24, durch den das fertige Getränk in die Kanne tropfen kann.

An der Innenwand des Hauptteils 12 sind von oben nach unten verlaufende Rippen 26 vorgesehen, an denen eine Filtertüte zur Anlage kommt.

Kurz unterhalb des oberen Randes ist in das Filtergefäß 10 eine rechteckige Überlauföffnung 28 eingearbeitet, die sich auf der runden Seite des Kragens 18 befindet. Diese Überlauföffnung 28 mündet in einen Überlaufkanal 30, der von zwei Rippen 32 begrenzt ist, die sich zu beiden Seiten der Überlauföffnung 28 an der Gefäßaußenwand nach unten erstrecken. Dieser Überlaufkanal 30 endet im Bereich des tiefsten Punktes in Höhe des geschlossenen Bodens 20 des Filtergefäßes 10.

Beim Zulauf von Heißwasser in das Filtergefäß 10 kann es vorkommen, daß mehr Heißwasser zugeführt wird, als über den Auslauf 24 ablaufen kann. In diesem Fall kann das überflüssige Heißwasser durch die Überlauföffnung 28 nach außen abfließen, so daß es zwischen den beiden Rippen 32 an der Außenseite des Filtergefäßes 10 nach unten abläuft und am unteren Ende des Überlaufkanals 30 in die darunter stehende Kanne tropft.

## Patentansprüche

1. Konisches Filtergefäß zur Aufnahme einer Filtertüte zur Herstellung von Aromaauszügen aus Kaffee oder Tee, mit einem an das Filtergefäß angeformten Überlaufkanal (30), dadurch gekennzeichnet, daß außen an das Filtergefäß (10) zwei sich vom oberen Gefäßrand nach unten erstreckende Rippen ausgebildet sind, die einen nach außen offenen Überlaufkanal (30) bilden.

2. Filtergefäß nach Anspruch 1, dadurch gekennzeichnet, daß der Überlaufkanal (30) von einer Überlauföffnung (28) ausgeht, die in den oberen Gefäßrand eingearbeitet ist.

## Claims

1. Conical filter vessel for receiving a filter bag for the preparation of aromatic extracts of coffee or tea, having an overflow channel (30) moulded onto the filter vessel, characterized in that two ribs are formed externally on the filter vessel (10), the said ribs extending downwards from the upper rim of the vessel and forming an overflow channel (30) which is open towards the outside.

2. Filter vessel according to Claim 1, characterized in that the overflow channel (30) starts from an overflow aperture (28) which is made in the upper rim of the vessel.

## Revendications

1. Récipient de filtration conique destiné à recevoir un cornet de filtrage pour la préparation d'extraits aromatisés à base de café ou de thé et comprenant un canal de trop-plein (30) agencé sur le récipient de filtration, caractérisé en ce que, à l'extérieur, sur le récipient de filtration (10), son façonnées deux nervures qui s'étendent vers le bas à partir du bord supérieur de récipient et wui forment un canal de trop-plein (30) ouvert vers l'extérieur.

2. Récipient de filtration suivant la revendication 1, caractérisé en ce que le canal de trop-plein (30) provient d'une ouverture de trop-plein (28) qui est façonnée dans le bortd supérieur du récipient.

Fig. 1

Fig. 2

Fig. 3